## Europäisches Patentamt

## European Patent Office

## Office européen des brevets

(19)

(11) Veröffentlichungsnummer: **0 230 646**
B1

(12) **EUROPÄISCHE PATENTSCHRIFT**

(45) Veröffentlichungstag der Patentschrift:
13.12.89

(51) Int. Cl.⁴: **F01C 21/06**, F02B 55/10

(21) Anmeldenummer: 86117939.8

(22) Anmeldetag: 23.12.86

(54) Flüssigkeitsgekühltes Gehäuse einer Rotationskolbenbrennkraftmaschine.

(30) Priorität: 23.12.85 DE 3545821

(43) Veröffentlichungstag der Anmeldung:
05.08.87 Patentblatt 87/32

(45) Bekanntmachung des Hinweises auf die Patenterteilung:
13.12.89 Patentblatt 89/50

(84) Benannte Vertragsstaaten:
AT DE FR GB IT

(56) Entgegenhaltungen:
DE-A- 2 201 886
DE-A- 2 506 245
GB-A- 799 658
US-A- 3 292 601
US-A- 3 572 984
US-A- 4 035 112
US-A- 4 050 132

(73) Patentinhaber: Wankel GmbH, Attilastrasse 56,
D-1000 Berlin 42(DE)

(72) Erfinder: Eiermann, Dankwart, Kirchstrasse 43,
D-8995 Weissensberg - West(DE)

(74) Vertreter: Freiherr von Welser, Hubert, Danziger
Strasse 15, D-8000 München 40(DE)

ACTORUM AG

## Beschreibung

Die Erfindung betrifft das Gehäuse einer Rotationskolbenbrennkraftmaschine der Trochoiden-Bauart, das aus Seitenteilen und einer zweibogigen Mantellaufbahn besteht und von einer Exzenterwelle durchsetzt ist, auf deren Exzenter ein dreikiger Kolben in gleitendem Eingriff an der Mantellaufbahn umläuft. Die Erfindung betrifft insbesondere eine mehrscheibige Rotationskolbenbrennkraftmaschine der gleichen Bauart, bei der zwischen den einzelnen Mantelteilen und Kolben Mitteile eingebaut sind.

Derartige Gehäuse weisen Hohlräume In Mantellaufbahn, Seiten- und Mantelteilen bzw. Seitenteilen auf, durch die Kühlflüssigkeit strömt. Dabei wird durch Lage und Durchflußweite dieser Hohlräume der beim Betrieb anfallenden Wärme und den Kühlerfordernissen einzelner Maschinenteile wie des Dichtsystems oder der Lager Rechnung getragen. Demnach befinden sich die Kühlräume im wesentlichen im Bereich des heißen Bogens und sie haben hier die Aufgabe, nicht nur die Brennraumwände, sondern vor allem die Kolben und deren Dichtteile zu kühlen. Es besteht daher ein naheliegendes Erfordernis an allen Kolbenseitenwänden, von denen vor allen die Wärme abgeleitet werden soll, gleiche Temperaturen zu erzielen.

Das Kühlsystem muß auf den Verwendungszweck der Brennkraftmaschine jeweils abgestimmt sein. Bei stationären Typen, die mit gleichmäßiger Last ohne Belastungsspitzen laufen und daher mit reduzierten Kühlung gefahren werden können, ist eine Serienschaltung der Kühlflüssigkeitswege zweckmäßig. Die Temperatur stellt sich im Betrieb auf ein Niveau innerhalb von 2 bis 3°C zwischen Anfang und Ende des Kühlmittelkreislaufs ein. Unter Serienschaltung ist zu verstehen, daß zum Beispiel bei einer Zweischeibenmaschine das Kühlmittel zunächst vom Wärmetauscher kommend durch die erste Seitenscheibe, dann durch das anliegende erste Mantelteil, von diesem durch das Mittelteil und von dort durch das zweite Mantelteil und schließlich durch die zweite Seitenscheibe und von da zurück zum Wärmetauscher oder solange die Betriebstemperatur noch nicht erreicht ist auf dem genannten Weg in geschlossenem Kreislauf geführt wird.

Bei Fahr- und Flugzeugmotoren mit deren sehr variabler Belastung mit plötzlich einsetzenden Spitzen würden bei der beschriebenen Art der Kühlung Überhitzungen eintreten. Es ist hier nicht vertretbar, die einzelnen Gehäuseabschnitte hintereinander mit Kühlmittel zu versorgen, da dann in den später geschalteten zu hohe Temperaturen auftreten. Es ist daher eine Parallelschaltung der einzelnen Gehäuseabschnitte zweckmäßig, so daß jeder einzelne Abschnitt des Gehäuses unmittelbar und sofort mit vom Wärmetauscher zufließendem Kühlmittel durchströmt wird, sofern nicht bei zu niedriger Temperatur ein geschlossener Kreislauf nach Verschluß des zwischen Gehäusekühlräumen und Wärmetauscher zwischengeschalteten Thermostaten hergestellt wird.

Bei einer in US-A 3 572 984 beschriebenen Konstruktion einer der eingangs angegebenen Maschinen ist ein gemeinsames Verbindungsrohr für die Zuführung des Kühlmittels vorgesehen, von dem dasKühlmittel zu den einzelnen Gehäuseabschnitten abgezweigt wird. Damit kann jedoch immer nur je nach Ausbildung dieses Verbindungsrohres und seiner Abzweigungen ganz bestimmten Erfoerdernissen an das Kühlsystem Rechnung getragen werden. Serien- bzw. Parallelschaltungen des Kühlmittelkreislaufes erfordern jedoch jeweils eine gesonderte Gehäusekonstruktion. Bei Vielzweckmotoren oder Konstruktionen für große Serienfertigungen, die sowohl für stationäre Motoren wie für solche sehr veriablen Kennfeldes ausgelegt sind, ist es notwendig, eine Anordnung des Gehäusekühlweges zur Verfügung zu haben, die durch einfache Maßnahmen für den einen oder den anderen Zweck geschaltet werden kann ohne die Gehäusekonstruktion selbst zu verändern. Der Erfindung war eine solche Anordnung als Aufgabe gestellt.

Die Lösung dieser Aufgabe ergibt sich aus den Ansprüchen.

Erfindungsgemäß steht demnach ein Gehäuse zur Verfügung,bei dem durch wahlweises Einsetzen von Verschlußscheiben oder von Blenden im das Kühlmittel den Gehäuseabschnitten zuleitenden Verbindungsrohr entweder eine Parallelschaltung oder eine Serienschaltung des Kühlmittelkreislaufes erhalten werden kann.

Die Gehäusekonstruktion als solche wird davon in keiner Weise betroffen, auch die Einsatzausfräsungen für die Verschlußscheiben bzw. die Blenden können die gleichen sein, so daß jeweils bei der Montage nur entweder die einen oder die anderen eingesetzt zu werden brauchen. Dabei können die Blendenöffnungen in ihrem Durchmesser den jeweiligen Kühlbedingungen angepaßt bzw. ausgetauscht werden. Die Erfindung bringt somit insbesondere bei großen Serienfertigungen ganz erhebliche Einsparungen und Erleichterungen, da es nur eines einzigen Modells des Gehäuses für die verschiedensten Maschinentypen bedarf.

Im folgenden werden anhand der Zeichnungen zwei Ausführungsbeispiele im einzelnen beschrieben.

Es zeigen

Fig. 1 ein Schema für eine Serienschaltung des Gehäusekühlmittelkreislaufes;

Fig. 2 einen Radialschnitt durch ein Gehäuse einer erfindungsgemäßen Rotationskolbenverbrennungsmaschine mit einer Fig. 1 entsprechenden Serienschaltung;

Fig. 3 einen in der Senkrechten verkürzten Radialschnitt durch die gleiche Maschine, jedoch mit Parallelschaltung des Gehäusekühlmittelkreislaufes.

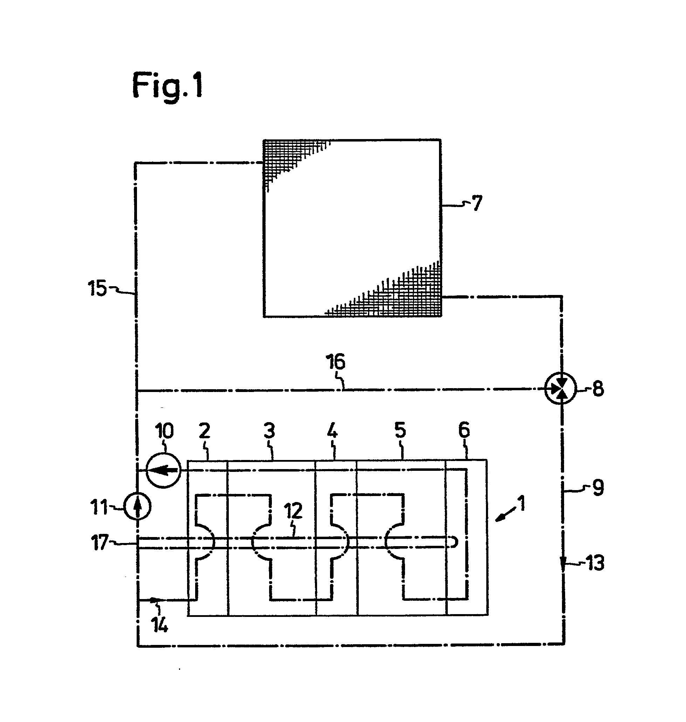

Bei dem in Fig. 1 dargestellten Schaltschema ist 1 das Gehäuse einer Rotationskolbenbrennkraftmaschine, das aus einzelnen Gehäuseabschnitten besteht, wobei 2 das erste Seitenteil, 3 das erste Mantelteil, 4 das Mittelteil, 5 das zweite Mantelteil und 6 das zweite Seitenteil darstellen. Der Wärmetauscher ist mit 7 bezeichnet. Bei 8 ist ein Thermostat vorgesehen, der den Kühlmittelkreislauf 9 vom Wärmetauscher 7 abschließt, solange die Betriebstemperatur noch nicht erreicht ist. 10 ist eine Umwälzpumpe für den Gehäusekreislauf des Kühlmittels, 11 eine kleinere Umwälzpumpe für einen durch eine Hohlwelle führenden Bypass 12.

Das Kühlmittel fließt in Richtung der Teile 13 und 14 zuerst durch das erste Seitenteil 2 in der Zeichnung nach oben und von da durch das erste Mantelteil 3 in der Zeichnung nach unten, und weiter durch die übrigen Gehäuseabschnitte 4 bis 6 und vom Seitenteil 6 zur Umwälzpumpe 10, über die es zurück zum Wärmetauscher 7 bzw. über die Leitung 16 zum Thermostaten 8 gefördert wird. Der Bypass 12 für die Exzenterwellen und Exzenterlagerkühlung zweigt bei 17 von dem Kühlmittelkreislauf 9 ab. Das die Welle durchströmende Kühlmittel wird von der Umwälzpumpe 11, in den Kreislauf 9 zurückgefördert. Es liegt demnach eine Serienschaltung vor, bei der die einzelnen Gehäuseabschnitte hintereinander vom Kühlmittel durchflossen werden, was bei Maschinen mit gleichmäßiger Belastung zweckmäßig ist.

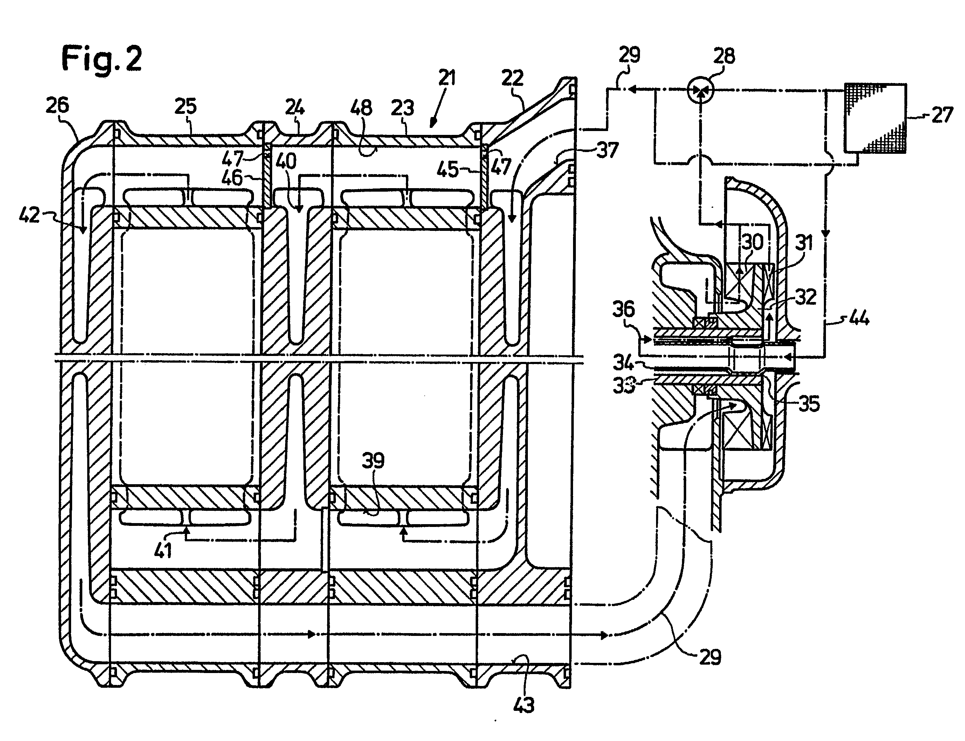

In Fig. 2 ist diese Art des Kreislaufes bei einem Gehäuse einer zweischeibigen Rotationskolbenmaschine im einzelnen dargestellt. Die Gehäuseabschnitte sind das rechte Seitenteil 22, das rechte Mantelteil 23, das Mittelteil 24, das linke Mantelteil 25 und das linke Seitenteil 26. Der Wärmetauscher ist bei 27 schematisch dargestellt, 28 bezeichnet den Thermostaten, 29 den Gehäusekühlmittelkreislauf, 30 die großen Flügel und 31 die kleinen Flügel einer Umwälzpumpe 32, die auf dem Ende der nur teilweise dargestellten Exzenterwelle 33 befestigt ist und mit dieser umläuft. Die Exzenterwelle 33 ist hohl ausgebildet. In ihrem dargestellten Ende ist ein Zuleitungsrohr 34 mit Abstandshaltern 35 fest und so angeordnet, daß zwischen dem rohrförmigen Ende der Exzenterwelle 33 und dem Zuleitungsrohr 34 ein Ringraum 36 offenbleibt.

Der Kühlmittelkreislauf 29 tritt bei der Kühlmitteleinlaßöffnugn 37 des Gehäuses 1 in das rechte Seitenteil 22 ein und durchläuft dessen Hohlräume 38 von oben nach unten, um an der Unterseite des Seitenteils 22 in die Hohlräume 39 des rechten Mantelteiles 23 überzutreten und anschließend das Mittelteil 24, das linke Mantelteil 25 und das linke Seitenteil 26 in gleicher Weise in Richtung der Pfeile 40,41,42 zu durchströmen. Von der Unterseite des linken Seitenteiles 26 läuft das Külmittel durch ein durch alle Gehäuseabschnitte 22 bis 26 durchgehendes Rückfuhrrohr 43 zu den großen Flügeln 30 der Umwälzpumpe 32 und von da zum Thermostaten 28. Die Bypassleitung für die Kühlung der Exzenterwelle 33 wird bei 44 von der Leitung zwischen Wärmetauscher 27 und Thermostat 28 zu dem Zuleitungsrohr 34 und von dessen nicht dargestelltem linken Ende durch den Hohlraum der Exzenterwelle 33 durch den Ringraum 36 zu den kleinen Flügeln 31 der Umwälzpumpe 32 und von dort in den allgemeinen Kühlmittelkreislauf 29 geführt.

Zwischen dem rechten Seitenteil 22 und dem rechten Mantelteil 23 ist eine Verschlußscheibe 45 und zwischen dem Mittelteil 24 und dem linken Mantelteil 25 eine ebensolche Verschlußscheibe 46 vorgesehen, die beide jeweils eine kleine Durchbrechung 47 zum Druckausgleich aufweisen. Sie sperren ein Verbindungsrohr 48 für die Zuführung des Kühlmittels ab und zwingen den Kühlmittelkreislauf in die in Fig. 1 schematisch dargestellte Serienschaltung.

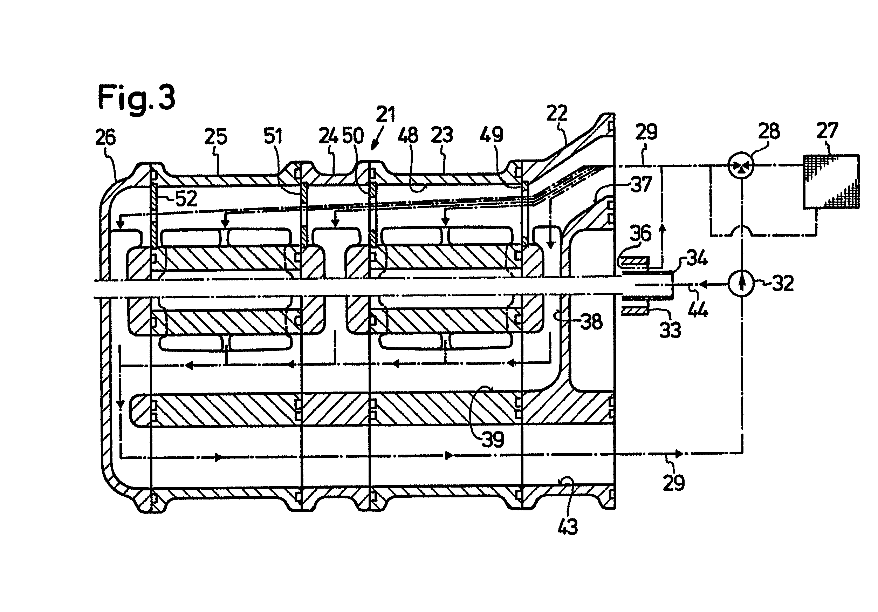

In Fig. 3 ist dieses Verbindungsrohr 48 bei dem dort dargestellten sonst mit dem in Fig. 2 gezeigten völlig gleichen Gehäuse durch alle Gehäuseabschnitte 22 bis 26 durchgehend offen. Das Kühlmittel kann also zu allen Gehäuseabschnitten 22 bis 26 unmittelbar und gleichzeitig von oben in einer Parallelschaltung zuströmen. In diesem Verbindungsrohr 48 sind jedoch zwischen dem rechten Seitenteil 22 und dem rechten Mantelteil 23 eine Blende 49 mit großer Öffnung und an den Übergängen zwischen dem rechten Mantelteil 23 und dem Mittelteil 24 eine Blende 50 und vom Mittelteil 24 zum linken Mantelteil 25 eine Blende 51 und an dem Übergang von dem linken Mantelteil 25 zum linken Seitenteil 26 eine Blende 52 mit jeweils kleiner werdenden Öffnungen vorgesehen, die den Zulauf zu den einzelnen Gehäuseabschnitten 22 bis 26 regulieren, um eine gleichmäßige Durchströmung aller dieser Gehäuseabschnitte zu erzwingen. Der Rücklauf des Kühlmittels erfolgt von allen Gehäuseabschnitten 22 bis 26 durch das Rückführrohr 43, wie dies bei der Ausführungsform zu Fig. 2 dargestellt und beschrieben ist.

Die beiden in Fig. 2 und 3 dargestellten Gehäuse 21 sind demnach bis auf die Abschottung des Verbindungsrohres 48 durch die Verschlußscheiben 45 und 46 bzw. die Blenden 49, 50, 51 und 52 völlig gleich und untereinander in den Einzelteilen austauschbar. Durch Einsetzen der Verschlußscheiben 45, 46 bzw. der Blenden 49, 50, 51, 52 kann der Kühlmittelkreislauf parallel oder in Serie durch das Gehäuse 21 geführt werden. Die Bypassleitung kann in beiden Fällen in der gleichen Weise abgezweigt und zurückgeführt werden. Anstelle der Bypass-gekühlten Welle kann auch eine herkömmliche ungekühlte Welle im Gehäuse eingesetzt und auf die Bypasskühlung verzichtet werden.

Bezugszeichenverzeichnis

Zu Fig. 1

  1 Gehäuse
  2 erstes Seitenteil
  3 erstes Mantelteil
  4 Mittelteil
  5 zweites Mantelteil
  6 zweites Seitenteil
  7 Wärmetauscher
  8 Thermostat
  9 Kühlmittelkreislauf
  10 Umwälzpumpe für 9
  11 Umwälzpumpe für 12
  12 Bypass
  13,14 Richtungspfeile
  15 Leitung 10,11 nach 7
  16 Leitung 10,11 nach 8
  17 Abzweigung für Bypass

Zu Fig. 2

21 Gehäuse
22 rechtes Seitenteil
23 rechtes Mantelteil
24 Mittelteil
25 linkes Mantelteil
26 linkes Seitenteil
27 Wärmetauscher
28 Thermostatl
29 Kühlmittelkreislauf
30 große Flügel von 32
31 kleine Flügel von 32
32 Umwälzpumpe
33 Exzenterwelle
34 Zuleitungsrohr in 33
35 Abstandshalter
36 Ringraum zwischen 33 und 34
37 Kühlmitteleinlaßöffnung
38 Hohlräume in 22
39 Hohlräume in 23
40,41,42 Richtungspfeile
43 Rückführrohr
44 Bypass
45 rechte Verschlußscheibe
46 linke Verschlußscheibe
47 Durchbrechung in 45,46
48 Verbindungsrohr
49,50,51,52 Blenden

**Patentansprüche**

1. Flüssigkeitsgekühltes Gehäuse (21) einer Rotationskolbenbrennkraftmaschine der Trochoidenbauart, das aus Seitenteilen (22,26) sowie mindestens einem Mantelteil (23,25) mit jeweils einer zweibogigen Mantellaufbahn besteht und von einer Exzenterwelle (33) mit mindestens einem Exzenter pro Mantelteil (23,25) durchsetzt ist, auf dem, bzw. denen jeweils ein dreieckiger Kolben in gleitendem Eingriff an der zugeordneten Mantellaufbahn umläuft, wobei die einzelnen Gehäuseabschnitten (22,23,24,25,26) ein gemeinsames Verbindungsrohr (48) aufweisen, über das ihnen ein Kühlmittel zugeführt wird,
dadurch gekennzeichnet, daß in das Verbindungsrohr (48) zwischen einzelnen Gehäuseabschnitten (22,23,24,25,26) entweder Verschlußscheiben (45,46) oder Blenden (49,50,51,52) mit unterschiedlichen Öffnungsweiten eingesetzt sind.
2. Gehäuse nach Anspruch 1,
dadurch gekennzeichnet, daß das Gehäuse zwei Mantelteile (23,25) und ein dazwischen angeordnetes Mittelteil (24) umfaßt und daß zur Herstellung einer Serienschaltung des Kühlmittelkreislaufes zwischen dem in Richtung des Kühlmittelflusses ersten Seitenteil (22) und dem ersten Mantelteil (23) sowie zwischen dem Mittelteil (24) dem zweiten Mantelteil (25) je eine Verschlußscheibe (45,46) eingesetzt ist.
3. Gehäuse nach Anspruch 2,
dadurch gekennzeichnet, daß die Verschlußscheiben (45,46) Druchbrechungen (47) für einen Druckausgleich aufweisen.
4. Gehäuse nach Anspruch 1,
dadurch gekennzeichnet, daß das Gehäuse zwei Mantelteile (23,25) und ein dazwischen angeordnetes Mittelteil (24) umfaßt und daß zur Herstellung einer Parallelschaltung des Kühlmittelkreislaufes zwischen dem in Richtung des Kühlmittelflusses ersten Seitenteil (22) und dem ersten Mantelteil (23) eine Blende (49) und zwischen dem ersten Mantelteil (23) und dem Mittelteil (24) sowie zwischen dem Mittelteil (24) und dem in Flußrichtung zweiten Mantelteil (25) und dem zweiten Seitenteil (26) je eine Blende (50,51,52) vorgesehen ist, wobei die Blendenöffnung der jeweils in Flußrichtung nachfolgenden Blende (50,51,52) kleiner ist als die der vorausgehenden Blende (49,50,51).
5. Gehäuse nach Anspruch 1, 2, 3, 4,
dadurch gekennzeichnet, daß die Verschlußscheiben (45,46) und die Blenden (49,50,51,52) jeweils gleiche Abmessungen und Einsatzprofile bzw. Verschraubungen aufweisen.
6. Gehäuse nach Anspruch 1, 2, 3, 4, 5,
dadurch gekennzeichnet, daß die Verschlußscheiben (45,46) bzw. die Blenden (49,50,51,52) runde flache Scheiben bzw. flache Ringe sind, und daß in den Verbindungsflächen der Gehäuseabschnitte (22,23,24,25,26) Ausdrehungen vorgesehen sind, in die die Verschlußscheiben (45,46) bzw. die Blenden (49,50,51,52) eingesetzt werden können.
7. Gehäuse nach Anspruch 1, 2, 3, 4, 5, 6,
dadurch gekennzeichnet, daß unabhängig von der Serien- oder Parallelschaltung des Kühlmittelkreislaufes von diesem ein Bypass (12,34,36) zur Kühlung der Exzenterwelle (33) und deren Exzenterlagern abgezweigt ist.

**Claims**

1. Liquid cooled housing (21) for a rotary piston combustion engine of trochoidal type of construction, which consists of side parts (22, 26) as well as at least one housing part (23, 25) with a dual-curved inner housing surfacing respectively and having an eccentric shaft for each housing part (23, 25) and a triangular piston rotating upon the eccentric or eccentrics respectively with corners of the piston in sliding engagement along the inner housing surfacing, comprising a connection tube (48) leading to individual housing sections (22, 23, 24, 25, 26) wherein a cooling medium is supplied thereto, characterized in that the housing comprising two housing parts (23, 25) as well as a central middle part (24) and that in the connecting tube (48) shutter discs (45, 46) or whashers (49, 50, 51, 52) with selective bores are inserted between the individual housing sections.
2. A housing according to claim 1, characterized in that comprising a first housing part (23) and a second housing part (25) as well as a central middle part (24), for production of a series connection of the cooling medium circulation a shutter disc (45, 46) respectively is installed between the first side part (22) in the direction of cooling medium flow and the first housing part (23) as well as between the central middle part (24) and the second housing part (25).
3. Housing according to claim 2, characterized in that in the shutter discs (45, 46) perforations (47) are located for pressure equalization.

4. Housing according to claim 1, characterized in that comprising a whasher (49) for production of a parallel connection of cooling medium circulation between a first side part (22) in direction of cooling medium flow and a first housing part (23) as well as shutters (50, 51, 52) respectively between a first housing part (23) and a central middle part (24) as well as between a central middle part (24) and a second housing part (25) in flow direction and between a second housing part (25) and a second side part (26), whereby whasher opening of whashers (50, 51, 52) means respectively following in flow direction, is smaller than that of the proceeding whashers (49, 50, 51).

5. Housing according to claim 1, 2, 3, 4, characterized in that said shutter discs (45, 46) and whashers (49, 50, 51, 52) respectively have identical measurements and installation profile shapes respectively screwings.

6. Housing according to claim 1, 2, 3, 4, 5, characterized in that said shutter discs (45, 46) and whashers (49, 50, 51, 52) respectively are round flat discs respectively flat rings, and that turned out recesses are provided in connection surfaces of the housing sections (22, 23, 24, 25, 26), into which said shutter discs (45, 46) respectively said whashers (49, 50, 51, 52) can be installed.

7. A housing according to claim 1, 2, 3, 4, 5, 6, characterized in that independently of series- or parallel connection of the cooling medium circulation a by-pass (12, 34, 36) including a conduit for cooling of the eccentric shaft (33) and its eccentric bearings thereof is branched-off.

**Revendications**

1. Bâti refroidi par liquide d'un moteur à combustion interne à piston rotatif du type trochoïde, comprenant des joues latérales et une surface trochoïdale bi-arquée, par lequel passe un arbre à excentrique, un piston triangulaire tournant, à contact glissant, sur la surface trochoïdale de l'excentrique dudit arbre, caractérisé en ce que des disques de fermeture (45, 46) ou des diaphragmes (49, 50, 51, 52) sont pourvus pour l'insertion en option dans le tuyau de communication (48) qui alimente les segments du bâti individuels (22, 23, 24, 25, 26) en agent réfrigérant, entre les segments du bâti individuels (22, 23, 24, 25, 26).

2. Bâti selon la Revendication 1, caractérisé en ce que respectivement un disque de fermeture (24, 46) est inséré entre une joue latérale (22) qui est la première en sens du courant de l'agent réfrigérant, d'une parrt et la première partie du corps de rotor (23), d'autre part, ainsi qu'entre la partie centrale (24) et la deuxième partie du corps de rotor (25) afin d'établir un montage en série du cycle de l'agent réfrigérant.

3. Bâti selon la Revendication 2, caractérisé en ce que des découpures (47) sont pourvus dans les disques de fermeture (45, 46) pour une compensation de pression.

4. Bâti selon la Revendication 1, caractérisé en ce qu'un diaphragme (49) est inséré entre une joue latérale (22) qui est la première en sens du courant de l'agent réfrigérant, d'une part, et la première partie du corps de rotor (23), d'autre part, pendant que respectivement un diaphragme (50, 51, 52) est inséré entre la première partie du corps de rotor (23) et la partie centrale (24), d'une part, et entre la partie centrale (24) et la joue latérale (25), d'autre part, qui est la deuxième en sens du courant de l'agent réfrigérant, ainsi qu'entre la deuxième partie du corps de rotor (25) et la deuxième joue latérale (26) afin d'établir un montage parallèle du cycle de l'agent réfrigérant, l'ouverture de chaque diaphragme disposé respectivement en aval (50, 51, 52) étant plus petit que celle du diaphragme disposé respectivement en amont (49, 50, 51).

5. Bâti selon les Revendications 1, 2, 3, 4, caractérisé en ce que chacun des disques de fermeture (45, 46) et des diaphragmes (49, 50, 51, 52) présente les mêmes dimensions et les mêmes profilés à insertion ou vissages.

6. Bâti selon les Revendications 1, 2, 3, 4, 5, caractérisé en ce que les disques de fermeture (45, 46) ou les diaphragmes (49, 50, 51, 52) sont des disques ronds plats ou des anneaux plats, et ainsi que dans les surfaces de contact entre les segments du bâti (22, 23, 24, 25, 26) sont pourvus des alésages pour l'insertion desdits disques de fermeture (45, 46) ou des diaphragmes (49, 50, 51, 52), respectivement.

7. Bâti selon les Revendications 1, 2, 3, 4, 5, 6, caractérise en ce qu'une dérivation (12, 34, 36) est branché du cycle de l'agent réfrigérant pour le refroidissement dudit arbre à excentrique (33) et ses portées associées, indépendamment du montage en série ou en parallèle dudit cycle.

# Fig.1

Fig.2

# Fig.3

EP 0 230 646 B1